Europäisches Patentamt

(19) European Patent Office    (11) Publication number:    **0 186 993**
Office européen des brevets    **B1**

(12)    **EUROPEAN PATENT SPECIFICATION**

(45) Date of publication of patent specification: **10.05.89**    (51) Int. Cl.⁴: **F 16 D 25/063**

(21) Application number: **85309007.4**

(22) Date of filing: **11.12.85**

(54) Hydraulically-actuated starting clutch.

(30) Priority: **24.12.84 US 685682**

(43) Date of publication of application:
**09.07.86 Bulletin 86/28**

(45) Publication of the grant of the patent:
**10.05.89 Bulletin 89/19**

(84) Designated Contracting States:
**DE FR GB IT NL SE**

(56) References cited:
**EP-A-0 098 054**
**EP-A-0 107 329**
**GB-A-2 073 340**
**US-A-2 904 149**
**US-A-3 064 780**
**US-A-3 213 988**
**US-A-3 599 512**
**US-A-4 241 618**

(73) Proprietor: **BORG-WARNER CORPORATION**
**200 South Michigan Avenue**
**Chicago Illinois 60604 (US)**

(72) Inventor: **Ferris, Ernest Albert**
**146 Greenleaf Drive**
**Oakbrook Illinois 60521 (US)**

(74) Representative: **Williams, Trevor John et al**
**J.A. KEMP & CO. 14 South Square Gray's Inn**
**London WC1R 5EU (GB)**

Courier Press, Leamington Spa, England.

## Description

The present invention relates to a hydraulically actuated starting clutch, and more specifically to a starting clutch assembly for a continuously variable transmission in an automotive vehicle. Continuously variable transmissions have been known for several years as a driving assembly between a vehicle engine and the road engaging wheels to provide a smooth acceleration without the usual shifting of gears found in most automatic transmissions. A continuously variable transmission can include variable sheave pulleys, an endless belt extending between and engaging the pulleys, and control means to alter the effective pulley diameters and thus change the speed ratio.

In automotive applications, it is necessary to incorporate a suitable clutch assembly in the drivetrain as a starting device and planetary gearing to effect desirable gear reduction and to provide for forward-neutral-reverse gear mechanisms. It is desirable to have the pulleys constantly rotating when the vehicle engine is running, even at an idle rpm, so that initiation of movement of the vehicle is accomplished by a throttle responsive friction starting device, such as a clutch, located at the output of the transmission, and a forward-neutral-reverse mechanism is preferably located in conjunction with or subsequent to the starting device.

Problems will arise in the resultant centrifugal force of a rotating clutch which traditionally provides liquid pressure that may influence actuation of the clutch. Further problems include engine stalling during rapid vehicle braking and lack of smoothness of clutch engagement during acceleration of the vehicle. The present invention overcomes these various problems in the form of a novel starting clutch assembly.

The present invention comprehends the provision of a starting clutch arrangement, particularly for a continuously variable transmission in an automotive vehicle, which is located at the output of the vehicle transmission to make the device automatic in coupling the vehicle engine to the driving wheels upon a signal from the throttle-induced system oil pressure and is in the form of a hydraulically operated wet clutch including an annular piston acting on the clutch pressure plate. Where there is no throttle signal, the clutch will substantially completely disengage so as to prevent vehicle creep due to viscous drag resulting from the cooling fluid flow between the clutch engaging surfaces. This clutch will also act as a torque "fuse" for the cone-belt drive system of the continuously variable transmission and is so sized as to slip before the metallic pulley belt slips.

EP-A-107 329 discloses an earlier clutch design of the present applicants in accordance with the prior art portion of claim 1. This clutch has weights provided on a Belleville spring to compensate for centrifugal force upon increased speed of rotation of the clutch. The present invention provides for a simpler construction which provides better balancing in that the weight of oil itself is used to provide compensation in an extremely simple way for variations in speed of rotation of the clutch. Thus, as characterised in claim 1, the present invention provides for the balance cap or shroud to trap balancing oil on the opposite side of the piston to the side supplied with pressure from the hydraulic source and also utilises projections from the piston to contact the pressure plate beyond the balance cap or shroud.

The balance cap or shroud is secured adjacent its periphery onto the clutch cover and acts to compensate for the centrifugal effect of oil behind the actuating piston and preferably has openings therein receiving the posts.

Further objects are to provide a construction of maximum simplicity, efficiency, economy and ease of assembly and operation, and such further objects, advantages and capabilities as will later more fully appear and are inherently possessed thereby.

Figure 1 is a front elevational view of the starting clutch of the present invention with portions broken away to show the internal clutch structure.

Figure 2 is a partial cross sectional view of the clutch taken on the line 2-2 of Figure 1.

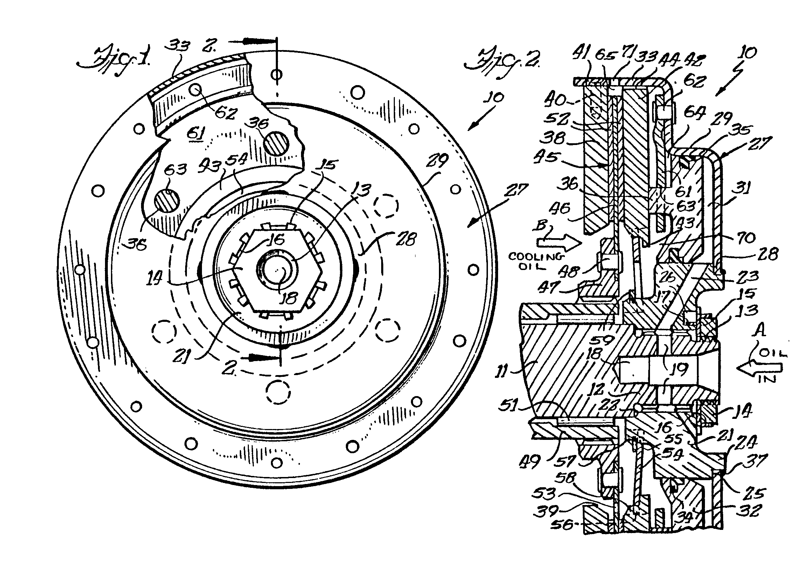

Referring more particularly to the disclosure in the drawing wherein is shown an illustrative embodiment of the present invention, Figures 1 and 2 disclose a hydraulically-actuated starting wet clutch 10 mounted on a driving shaft 11 from a continuously variable transmission (not shown), such as illustrated in U. S. Patent No. 4,241,618. The shaft has a stepped end portion 12 terminating in a reduced threaded end 13 receiving an internally threaded nut 14 and a locking washer 15 with locking tabs 16 adapted to engage the flats on the nut once the nut is tightened onto the shaft. The end of the shaft has a central opening or passage 18 therein communicating with several generally radial feed holes or passages 19.

A generally annular hub 21 is received on the stepped end portion 12 by a splined connection and retained thereon by the nut 14; the axial force of the nut acting on the washer 15 and hub 21 to hold the hub against a shoulder 22 defining the stepped portion of the shaft. The hub includes several generally radial fluid passages 23 whose circular alignment corresponds with feed passages 19, with alignment retained due to the splined connection. The hub includes an axially extending annular flange 24 defining a shoulder 25 receiving the inner periphery 28 of a clutch cover or housing 27. Also, the outer face of the hub is provided with several circumferentially spaced holes 26 receiving locking tabs 17 on the washer 15 extending in the opposite direction from tabs 16. The housing is stepped at 29 to define a chamber 31 accommodating an axially movable piston 32 and then extends outwardly to terminate in an axial flange portion 33. The piston 32 includes inner and outer annular resilient lip seals 34 and 35 engaging the periphery of the hub 21 and the stepped wall 29 of the housing 27 to seal the piston in chamber 31. On the face of the piston opposite to the chamber 31 are a plurality of circumferentially equally spaced axially extending cylindrical projections 36. The housing 27 is secured to the hub at 37 as by welding.

An end plate 38 has an inner beveled surface 39 and an outer periphery 41 secured to the axial flange portion 33 by screws 40 or other suitable means. Also, an annular pressure plate 42 has an inner lip 43 and an outer periphery 44 slidably mounted in the housing. Between the end plate 38 and the pressure plate 42 is positioned a clutch plate 45 having a core plate 46 secured to a powdered metal hub 47 through suitable fastening means, such as rivets 48 received in openings in the core plate and hub. The hub 47 is internally splined to receive the splined end of a sleeve or driven shaft 49 encompassing the shaft 11 and rotatably mounted on bearings 51; the sleeve shaft 49 acting to drive the vehicle wheels through a suitable differential (not shown).

The clutch plate includes a pair of oppositely disposed friction facings 52, 52 formed preferably of a non-asbestos, high coefficient material that are adhesively bonded to the core plate 46. The facings are suitably grooved and provided with feeder slots for high cooling oil flow (arrow B) through the clutch at low back pressure. The cooling oil can flow through perforations 53 in the core plate so as to cool both surfaces of the clutch plate, and oil is encouraged to linger in the annular "neighborhood" of the clutch plate by reason of the machined bevel surface 39 at the inner diameter of the end plate 38.

A Belleville spring 54 has teeth 55 at its internal diameter engaging corresponding teeth 57 formed on a shoulder of the hub 21 adjacent the shoulder 22 on the shaft 11 and teeth 56 at its outer diameter engaging teeth 58 formed in the inner periphery of the pressure plate 42. A snap ring 59 on the hub retains the inner periphery of the Belleville spring 54 on the hub 21, and the lip 43 on the pressure plate 42 in conjunction with the force of the spring retains the spring on the pressure plate. Thus, the Belleville spring acts to retract or return both the pressure plate and the piston and acts to centralize the pressure plate relative to the hub. Also, the teeth on the spring acts to rotatably connect the hub and the pressure plate, thus obviating a splined connection between the pressure plate and housing.

A balance cap or centrifugal shroud 61 in the form of an annular plate is secured to the housing, such as by rivets 62, adjacent its outer diameter as seen in Figure 2 and is provided with a plurality of circumferentially equally spaced openings 63 receiving the piston projections 36 in close fitting relationship. The clearance 70 between the inner diameter of the shroud and piston 32 allows casual oil to reside in the centrifugal shrouded zone 64 to substantially balance the oil on the other side of the piston 32 and thus prevent unwanted "apply" of the piston at high rotating speeds.

Hydraulic fluid under pressure is supplied from a throttle-induced pump (not shown) in the vehicle drive system as shown by arrow A in Figure 2 through a conduit communicating with the passage 18 of the rotating joint to actuate the piston 32 in pressure chamber 31. Also, the complete assembly 10 has a housing (not shown) encompassing the assembly, and a source of cooling fluid is available at the left-hand end of the assembly as shown by arrow B in Figure 2 to cool the friction surfaces of the clutch plate, pressure plate and end plate; the pressure plate 42 and end plate 38 both being relatively thick to provide an adequate heat sink to handle short but high-powered clutch engagements. As the variable transmission pulleys are accelerated from idle rpm, the fluid pump increases the hydraulic pressure applied through the supply conduit and passages 18, 19 and 23 to the pressure chamber 31 to urge the piston 32 to the left as seen in Figure 2. The projections 36 on the piston act directly upon the rear surface of the pressure plate 42 against the restraint of the Belleville spring 54 to urge the pressure plate into frictional contact with the friction clutch plate 45 to engage the end plate 38 and cause rotation of the sleeve shaft 49 to drive the vehicle wheels upon being coupled to rotation of the driving shaft 11.

The Belleville spring is provided with inner and outer teeth so that continuous rotation of the driving shaft 11 and hub 21 results in rotation of the Belleville spring 54 and pressure plate 42. Also, the housing 27 and end plate 38 secured thereto rotate with the shaft 11 and hub. If it were not for the access to the pressure plate 42 through the openings 63 in the balance cap 61 by the projections 36, the clutch lock-up force would have to be at the extreme inward diameter of the pressure plate where undesirable deflection might occur. The cooling oil enters the clutch in the annular zone designated by arrow B, with some oil passing through the perforations 53 in the clutch disc or core plate 46 to reach the other side. After passing through grooves in the clutch plate lining 52, oil exits in the area 65 through holes 71 in the housing flange portion 33. Also, some oil passes through slots in the Belleville spring and clearance 70 to reside in the centrifugal shrouded zone 64 and compensate for the centrifugal effect of the oil in the pressure chamber 31 and thus prevent unwanted partial application of the piston at high rotative speed, such as 10,000 rpm. Also, it is difficult to keep the clutch capacity in its proper relationship to the transmission belt capacity for the pulleys if centrifugal hydraulic forces are allowed to interfere.

The Belleville spring serves the following functions:

1) It acts as a return spring for the piston.

2) It determines the pressure for engagement of the clutch.

3) It centralizes the annular pressure plate in the housing and drives the pressure plate through its connection with the hub and the shaft.

When the operator releases the throttle during operation of the vehicle, the hydraulic pressure rapidly decreases and the Belleville spring 54 acts to retract the piston 32 and disengage the clutch plate cleanly sufficiently to prevent vehicle creep. Although shown and described as a starting clutch for a continuously variable transmission it is obvious that this clutch can be utilized in other transmission arrangements where a starting clutch is necessary or desirable.

**Claims**

1. A starting clutch (10) adapted to engage upon a signal from a throttle-induced system oil pressure to couple a driving shaft (11) with a driven concentric sleeve shaft (49), comprising a hub (21) operatively connected to rotate with the continuously rotatable driving shaft (11), a clutch housing (27) secured to said hub and having an axial flange portion (33), an annular pressure chamber (31) receiving an axially reciprocable annular piston (32), a clutch plate (45) carrying friction facings (52), a second hub (47) operatively connected to the driven sleeve shaft (49) and secured to the clutch plate (45), and an end plate (38) secured to said axial flange portion (33), a pressure plate (42) axially reciprocable in said housing (27) on the opposite side of the clutch plate from the end plate, a Belleville spring (54) in said housing (27) and operatively connected with said pressure plate (42) for driving rotation therewith, and a source (18) of hydraulic pressure communicating with said pressure chamber, characterised in that the clutch housing (27) has an intermediate step (29) which, with said first hub, defines the pressure chamber (31), a balance cap (61) is secured in said housing (27) to entrap casual oil substantially to balance the oil in the pressure chamber (31) under centrifugal force, and a plurality of axial projections (36) on said piston (32) contact said pressure plate (42) for moving it towards the clutch plate and end plate against the action of the Belleville spring responsive to the supply of pressure to said pressure chamber.

2. A starting clutch as claimed in claim 1, characterised in that said balance cap (61) comprises an annular plate secured to the housing and having openings (63) therein closely accommodating said piston projections (36).

3. A starting clutch as claimed in claim 2, characterised in that clearance (70) between the inner diameter of said balance cap (61) and said piston (32) allows a portion of cooling fluid to react with said piston under centrifugal force.

4. A starting clutch as claimed in claim 1, 2 or 3, characterised in that said Belleville spring (54) has toothed inner (55) and outer (56) peripheries engaging said hub (21) and pressure plate (42) respectively.

**Patentansprüche**

1. Anfahrkupplung (10) die aufgrund eines Öldrucksignals eines drosselinduzierten Systems eingreift zum Kuppeln einer Antriebswelle (11) mit einer angetriebenen konzentrischen Hohlwelle (49), wobei die Anfahrkupplung eine Nabe (21) aufweist, die mit der kontinuierlich drehbaren Antriebswelle (11) verbunden ist, ein Kupplungsgehäuse (27), das an der Nabe befestigt ist und einen axialen Flanschabschnitt (33) aufweist, eine ringförmige Druckkammer (31), die einen axial hin- und hergehenden ringförmigen Kolben (32) aufnimmt, eine Kupplungsscheibe (45), die Reibbeläge (52) aufweist, eine zweite Nabe (47), die mit der angetriebenen Hohlwelle (49) verbunden und an der Kupplungsscheibe (45) befestigt ist, und eine Endplatte (39), die an dem axialen Flanschabschnitt (33) befestigt ist, eine Druckplatte (42), die in dem Gehäuse (27) auf der gegenüberliegenden Seite der Kupplungsscheibe von der Endplatte axial hin- und herbewegbar ist, eine Tellerfeder (54) in dem Gehäuse (27), die mit der Druckplatte (42) zur treibenden Drehung damit verbunden ist, und eine Quelle (18) hydraulischen Drucks, die mit der Druckkammer in Verbindung steht, dadurch gekennzeichnet, daß das Kupplungsgehäuse (27) eine Zwischenstufe (29) aufweist, welche mit der ersten Nabe die Druckkammer (31) bildet, eine Ausgleichshaube (61) in dem Gehäuse (27) befestigt ist, um gelegentlich anfallendes Öl aufzunehmen, um im wesentlichen das Öl in der Druckkammer (31) unter Zentrifugalkraft auszugleichen, und mehrere axiale Vorsprünge (36) auf dem Kolben (32) die Druckplatte (42) berühren, um sie zu der Kupplungsscheibe und Endplatte hin gegen die Wirkung der Tellerfeder zu bewegen, die auf die Versorgung mit Druck zur Druckkammer anspricht.

2. Anfahrkupplung nach Anspruch 1, dadurch gekennzeichnet, daß die Ausgleichshaube (61) eine ringförmige Platte aufweist, die an dem Gehäuse befestigt ist und Öffnungen (63) aufweist, worin die Kolbenvorsprünge (36) eng anschließend aufgenommen werden.

3. Anfahrkupplung nach Anspruch 2, dadurch gekennzeichnet, daß die Toleranz (70) zwischen dem inneren durchmesser der Ausgleichshaube (61) und dem Kolben (32) erlaubt, daß ein Anteil von kühlendem Strömungsmittel unter Zentrifugalkraft mit dem Kolben reagiert.

4. Anfahrkupplung nach Anspruch 1, 2 oder 3, dadurch gekennzeichnet, daß die Tellerfeder (54) mit Zähnen versehene innere (55) und äußere (56) Umfänge aufweist, die mit der Nabe (21) bzw. mit der Druckplatte (42) zusammenwirken.

**Revendications**

1. Embrayage de démarrage (10) destiné à être engagé sur un signal à partir de la pression d'huile du système induite par papillon pour coupler un arbre d'entraînement (11) à un arbre creux mené concentrique (49), comprenant un moyeu (21) connecté fonctionnellement de manière à tourner avec l'arbre d'entraînement rotatif en continu (11), un carter (27) d'embrayage fixé au moyeu et ayant une partie à flasque axial (33), une chambre annulaire de pression (31) recevant un piston annulaire (32) pouvant se déplacer dans un mouvement axial de va-et-vient, une plaque d'embrayage (45) portant des garnitures de friction (52), un second moyeu (57) connecté fonctionnellement à l'arbre creux mené (49) et fixé à la plaque d'embrayage (45), et une plaque d'extrémité (38) fixée à la partie à flasque axial (33), une plaque de compression (42) pouvant être animée d'un mouvement de va-et-vient axial dans le carter (27) sur le côté opposé de la plaque d'embrayage par rapport à la plaque d'extrémité, un ressort Belleville (54) dans le carter (27) et connecté fonctionnellement à la plaque de compression (42) pour rotation d'entraînement avec elle, et une source (18) de pression hydraulique communiquant avec la chambre de pression, caractérisé en ce que le carter d'embrayage (27) comporte un gradin intermédiaire (29) qui, avec le premier moyeu, définit la chambre de pression (31), un chapeau d'équilibrage (61) est fixé dans le carter (27) pour enfermer l'huile accidentelle pratiquement dans le but d'équilibrer l'huile dans la chambre de pression (31) sous l'effet de la force centrifuge, et une multitude de saillies axiales (36) sur le piston (32) sont en contact avec la plaque de compression (42) pour la déplacer vers la plaque d'embrayage et la plaque d'extrémité à l'encontre de l'action du ressort Belleville en réponse à la fourniture d'une pression à la chambre de pression.

2. Embrayage de démarrage selon la revendication 1, caractérisé en ce que le chapeau d'équilibrage (61) comprend une plaque annulaire fixée au carter et ayant des ouvertures (63) recevant étroitement les saillies (36) du piston.

3. Embrayage de démarrage selon la revendication 2, caractérisé en ce que le jeu (70) entre le diamètre intérieur du chapeau d'équilibrage (61) et le piston (32) permet à une partie d'un fluide de refroidissement de réagir avec le piston sous l'effet de la force centrifuge.

4. Embrayage de démarrage selon la revendication 1, 2 ou 3, caractérisé en ce que le ressort Belleville (54) a des périphéries intérieure (55) et extérieure (56) dentées s'engageant dans le moyeu (21) et la plaque de compression (42), respectivement.

Fig. 1.

Fig. 2.

COOLING OIL

OIL IN

EP 0 186 993 B1